# FASCICULE DE BREVET EUROPEEN

(11) **EP 3 448 789 B1**
(45) Date de publication et mention de la délivrance du brevet: **10.03.2021**
(21) Numéro de dépôt: 17723287.3
(22) Date de dépôt: 25.04.2017
(51) Int. Cl.: B65G 65/23, B65G 11/20

(54) **DISPOSITIF DE DISTRIBUTION REGULEE DE COMPOSANTS**
VORRICHTUNG ZUR GEREGELTEN VERTEILUNG VON KOMPONENTEN
DEVICE FOR REGULATED DISTRIBUTION OF COMPONENTS

(30) Priorité: 25.04.2016 FR 1653650
(43) Date de publication de la demande: 06.03.2019
(73) Titulaire: Regulasystem SA, 1222 Vesenaz (CH)
(72) Inventeur: LEROY, Christian, 1380 Lasne (BE)
(74) Mandataire: Cabinet Beau de Loménie
(86) Numéro de dépôt international: PCT/EP2017/059793
(87) Numéro de publication internationale: WO 2017/186715

(56) Documents cités:
- WO-A1-2009/127835
- FR-A1- 2 899 215
- US-A1- 2005 115 982
- US-A1- 2005 155 978

## Description

### Arrière-plan de l'invention

La présente invention concerne un dispositif de distribution régulée de composants contenus dans un bac, permettant de vider de manière contrôlée le bac rempli de composants.

L'invention permet notamment de réguler le débit d'acheminement desdits composants vers un poste de réception.

De préférence, mais pas exclusivement, les composants sont des bouchons de bouteilles, ou encore des préformes de bouteilles, par exemple en plastique, ou bien tout autre type de composants.

Il est connu des dispositifs de distribution de composants tels des trémies doseuses remplies en composants. Ce type de trémie comporte en son extrémité inférieure un système de régulation permettant de réguler le débit de passage des composants à travers l'extrémité inférieure, par exemple vers un tapis convoyeur. Un inconvénient de ces trémies doseuses concerne l'ergonomie du poste. En effet, de telles trémies doseuses sont généralement installées fixement et ne comportent pas de système d'automatisation permettant de vider un bac rempli de composants dans ladite trémie. Un opérateur est contraint de vider manuellement les composants contenus dans le bac dans la trémie. Or, de telles trémies sont généralement agencées à une hauteur plus ou moins importante en sorte de permettre la chute par gravité des composants sur le poste de réception. Il en résulte que l'opérateur doit utiliser un marchepied ou équivalent pour atteindre la partie supérieure de la trémie doseuse et effectuer le remplissage de celle-ci en renversant un bac rempli de composants. Une telle opération peut s'avérer plus ou moins contraignante selon le poids des composants conditionnés généralement dans des bacs plus ou moins volumineux Le document WO2009127835 A divulgue un dispositif de distribution régulée de composants contenus dans un bac, selon le préambule de la revendication 1.

En outre, afin d'automatiser le versement des composants contenus dans un bac dans la trémie, il est généralement nécessaire de vider entièrement le bac au préalable, par exemple sur un tapis convoyeur et de rehausser tout ou partie de la chaîne d'acheminement des composants en amont de ladite trémie, de sorte que les composants sont acheminés, par exemple via le tapis convoyeur, jusqu'à la hauteur de la trémie. Ceci peut perturber l'acheminement des composants et rend la chaîne d'acheminement d'autant plus encombrante.

### Objet et résumé de l'invention

Un but de la présente invention est de proposer un dispositif de distribution régulée remédiant aux inconvénients précités.

Pour ce faire, l'invention porte sur un dispositif de distribution régulée pour la distribution de composants contenus dans un bac , selon la revendication 1.

On comprend que le bac rempli de composants est tout d'abord amené vers le support, par des moyens d'amenée appropriés, tel un convoyeur, afin d'être reçu par le support. Le support comporte de préférence un dispositif de maintien pour maintenir le support ensemble avec le bac.

Le support est mobile par rapport à la trémie suivant un mouvement de translation, permettant de rapprocher le support et la trémie jusque dans la position de couplage.

Dans ladite position de couplage, tout en restant maintenu par le support, le bac est en contact ou est très proche de la trémie, afin que les composants ne puissent pas sortir par l'éventuel interstice existant entre le bord supérieur de la trémie qui définit la grande ouverture de ladite trémie et le bac. De préférence, dans cette position de couplage, le bac et la trémie délimitent un espace sensiblement clos formant un volume intérieur.

De préférence, les dimensions de l'ouverture supérieure du bac correspondent aux dimensions de la grande ouverture de la trémie, de sorte qu'en position de couplage, le contact entre la trémie et le bac est sensiblement hermétique et les composants sont contenus dans le volume délimité par le bac et la trémie.

Les seconds moyens de déplacement sont configurés pour faire pivoter ledit ensemble jusqu'à la position de distribution, par exemple par rapport à l'armature. Ceci a pour conséquence de faire pivoter le bac et ainsi de le basculer suffisamment pour que les composants passent du bac à la trémie et soient évacués hors dudit ensemble, à travers la petite ouverture de la trémie. On comprend que la trémie joue le rôle d'un entonnoir permettant de guider les composants vers un poste de réception.

Ainsi, selon le dispositif de distribution régulée de la présente invention, le transfert des composants depuis le bac vers la trémie puis vers le poste de réception est facilité et automatisé. L'opérateur n'est pas tenu de grimper pour atteindre la trémie ni de retourner manuellement le bac pour le vider de ses composants. L'opérateur ne réalise aucun effort autre que le dépôt du bac dans le dispositif de distribution.

Il n'est pas non plus nécessaire d'adapter la chaîne d'acheminement des composants à la hauteur de la trémie, ce qui améliore d'autant plus la compacité et l'ergonomie de ladite chaîne d'acheminement.

L'organe de régulation est quant à lui configuré pour réguler le débit de composants sortant de l'ensemble constitué de la trémie et du bac.

La distribution régulée permet d'adapter facilement la distribution de composants aux besoins en aval de l'ensemble de la chaîne d'acheminement, ce qui permet d'améliorer l'acheminement des composants et d'éviter, par exemple, les engorgements et le bourrage pouvant abîmer les composants. L'invention permet également d'éviter l'utilisation de dispositifs de régulation additionnels, ce qui permet de réduire le coût global de la chaîne d'acheminement. En outre, il est connu que les normes sur les composants de conditionnement, tels que les bouteilles, sont très strictes et qu'il est indispensable d'éviter tout endommagement desdits composants. Grâce au dispositif de distribution selon l'invention, les composants contenus dans le bac ne sont pas tous versés simultanément sur le poste de réception, limitant ainsi les risques de dégradations des composants entrant en contact lors de leur chute.

De manière non limitative, cette régulation peut être asservie en fonction de l'état d'un poste de travail disposé en aval du dispositif de distribution selon l'invention. On comprend que si ledit poste de travail en aval est surchargé, un ordre de réduction du débit de distribution sera envoyé à l'organe de régulation. Le débit de distribution des composants est dans ce cas asservi en temps réel par le poste de travail en aval du dispositif de distribution.

En outre, de manière non limitative, le dispositif de distribution comporte des moyens de contrôle de la vitesse de pivotement de l'ensemble constitué par la trémie et le support. Le pivotement dudit ensemble, depuis la première position jusqu'à la deuxième position, dite position de distribution, peut se faire progressivement et sans àcoup. De cette manière, les composants glissent lentement depuis le bac jusque dans la trémie, ce qui réduit les risques de chocs subis par les composants.

De manière non limitative, les seconds moyens de déplacement sont également configurés pour faire pivoter l'ensemble constitué par la trémie et le support depuis la position de distribution jusqu'à la première position. Les composants restants dans la trémie sont alors reversés dans le bac. Les premiers moyens de déplacement peuvent alors ramener le support, et donc le bac, en position initiale.

Selon un mode de réalisation préférentiel, mais non exclusif, les premiers moyens de déplacement sont configurés pour déplacer le support vers la trémie selon une direction sensiblement verticale. La trémie reste maintenue fixe tandis que le support monte pour se rapprocher de la trémie, jusqu'au contact, ou quasi-contact, entre le bac et ladite trémie. Le déplacement vertical du support permet en outre de limiter l'encombrement en réduisant les dimensions latérales du dispositif de distribution.

De préférence, l'axe de rotation passe par le bac lorsque l'ensemble constitué par la trémie et le support est en position de couplage. Cela permet de faire pivoter le bac sensiblement sans le déplacer latéralement.

Selon un aspect avantageux de l'invention, l'angle, considéré dans un plan vertical, entre ladite première position de repos et ladite position de distribution, suivant l'axe de rotation de l'ensemble constitué de la trémie et du support, est compris entre 90° et 180°, de préférence entre 110° et 160°. Cet angle donne une inclinaison suffisante au bac et à la trémie pour permettre aux composants de tomber par gravité depuis le bac jusque dans la trémie, puis de passer à travers la petite ouverture de la trémie et tomber par gravité sur le poste de réception. De plus, avec un angle inférieur à 160°, le bac n'est pas entièrement retourné, de sorte que les composants glissent lentement depuis le bac vers la trémie, ce qui adouci la chute des composant et limite les risques de collisions pouvant endommager lesdits composants.

Encore de préférence, ledit angle, considéré dans un plan vertical, entre ladite première position de repos et ladite position de distribution est environ égal à 135°.

Préférentiellement, le dispositif de distribution selon l'invention comprend une armature et les seconds moyens de déplacement comprennent un châssis solidaire de la trémie et du support, monté pivotant par rapport à ladite armature, selon l'axe de rotation de l'ensemble constitué de la trémie et du support. Le châssis est mobile par rapport à l'armature autour de l'axe rotation, la trémie étant fixe par rapport au châssis et le support étant mobile en translation par rapport audit châssis. Ledit châssis assure donc le maintien de la trémie et du support ainsi que le pivotement de la trémie, du bac et du support, suivant l'axe de rotation.

De préférence, mais de manière non limitative, l'armature comporte une portion de structure sensiblement verticale, transversale à l'axe de rotation de l'ensemble constitué de la trémie et du support, sur laquelle est monté le châssis de manière pivotante.

La configuration retenue dépend généralement de la conformation de la chaîne d'acheminement des composants et de l'espace disponible sur le lieu d'installation du dispositif de distribution.

De préférence, les seconds moyens de déplacement sont configurés pour disposer l'ensemble constitué par la trémie et le support, en position de couplage, dans une position de vidange correspondant à un pivotement dudit ensemble de 180° par rapport à la première position. Dans cette position de vidange, le bac est entièrement retourné, de sorte que son ouverture supérieure est disposée en regard du sol et la petite ouverture de la trémie est également orientée vers le bas. Sous l'effet de la gravité, les composants restants dans la trémie, et éventuellement dans le bac, sont guidés vers la petite ouverture de la trémie pour être distribués sur le poste de réception.

Selon un autre aspect avantageux de l'invention, l'organe de régulation comporte un obturateur configuré pour obturer tout ou partie de la petite ouverture de la trémie.

L'obturateur de l'organe de régulation permet de réguler le débit de composants à distribuer sur le poste de réception, en contrôlant l'obturation de la petite ouverture de la trémie. En obturant davantage la petite ouverture, c'est-à-dire en diminuant la section de passage, l'obturateur réduit le débit de distribution, tandis que le débit de distribution augmente lorsque la petite ouverture est plus faiblement obturée, c'est-à-dire lorsque la section de passage de la petite ouverture est augmentée. La distribution peut être interrompue en obturant partiellement ou complétement la petite ouverture de la trémie.

Autrement dit, l'obturateur de l'organe de régulation est configuré pour régler la section de passage de la petite ouverture de la trémie, incluant la fermeture de ladite petite ouverture.

De préférence, l'organe de régulation peut prendre une position partiellement fermée dans laquelle l'obturateur n'obture que partiellement la petite ouverture de la trémie, et une portion fermée, dans laquelle l'obturateur obture complément la petite ouverture de la trémie. Dans les positions partiellement fermée et fermée, la distribution des composants est interrompue.

Selon l'invention, l'obturateur est pivotant suivant un axe de pivotement. De préférence, l'axe de pivotement est sensiblement parallèle à l'axe de rotation de l'ensemble constitué de la trémie et du support. L'obturation de la petite ouverture est donc ajustée en faisant pivoter l'obturateur pivotant. Un intérêt est de permettre une distribution douce des composants. En variante, l'obturateur est pivotant selon un axe de pivotement sensiblement perpendiculaire à l'axe de rotation de l'ensemble constitué de la trémie et du support.

De préférence, l'obturateur pivotant comporte un réservoir tampon pour recevoir les composants sortant de la trémie. De cette manière, une petite quantité de composants s'accumulent dans le réservoir avant d'être distribués. Avantageusement, le réservoir comporte une portion concave. De préférence, le réservoir comporte une portion cylindrique dont l'axe est coaxial à l'axe de pivotement de l'obturateur.

Préférentiellement, l'obturateur pivotant comporte un plateau de transfert formant glissière configuré pour accompagner les composants qui sortent de la trémie. Les composants s'écoulent doucement sur le plateau de transfert jusque sur le poste de réception. Un intérêt est d'assurer un transfert doux des composants entre la trémie et le poste de réception. Ce plateau de transfert améliore encore la régulation du débit de distribution des composants.

De manière avantageuse, le réservoir tampon est disposé sous un plan passant par le plateau de transfert, grâce à quoi les composants sont maintenus plus efficacement dans le réservoir lorsque l'organe de régulation est placé dans la position partiellement fermée.

Avantageusement, considérée selon une direction perpendiculaire à l'axe de pivotement de l'obturateur, la longueur de l'obturateur pivotant est supérieure à la longueur de la petite ouverture de la trémie. Aussi, lorsque l'organe de régulation est en position partiellement fermée de sorte que l'obturateur obture partiellement la petite ouverture de la trémie, le plateau de transfert s'étend au-delà de la petite ouverture de la trémie, considéré selon ladite direction. Un intérêt est de retenir les composants sur ledit plateau et ainsi mieux maitriser la quantité de composants distribués.

De préférence, dans la position partiellement fermée de l'organe de régulation, et lorsque l'ensemble constitué du support et de la trémie est placé dans la position de distribution, le plateau de transfert s'étend sensiblement horizontalement, encore de préférence, est incliné vers le haut par rapport à un plan horizontal. De cette manière, les composants présents sur ledit plateau de transfert sont maintenus dans le réservoir et sur le plateau de transfert incliné.

Préférentiellement, dans la position partiellement fermée de l'organe de régulation, et lorsque l'ensemble constitué du support et de la trémie est placé dans la position de distribution, le bord avant du plateau de transfert est située au-dessus du bord de la petite ouverture de la trémie. Aussi, dans cette position partiellement fermée, les composants sont maintenus plus efficacement sur le plateau de transfert et dans le réservoir tampon et ne risquent pas de s'en échapper, la régulation de la distribution est donc améliorée.

En outre, de préférence, dans cette position partiellement fermée, la petite ouverture n'est pas totalement obturée mais la distance entre le bord avant de la petite ouverture et le plateau n'est pas suffisante pour permettre la distribution des composants. L'arrêt de la distribution est obtenu par bourrage des composants au niveau de la petite ouverture. Un avantage est que les composants ne sont pas pincés entre le bord de la petite ouverture de la trémie et le plateau de transfert, de sorte qu'ils ne risquent pas d'être endommagés. Autrement dit, l'invention permet de réguler la distribution des composants sans abimer ceux qui se trouvent à proximité de l'obturateur au moment de son mouvement de fermeture.

Avantageusement, l'organe de régulation comporte des moyens d'ajustement de l'angle de rotation du plateau de transfert, afin de réguler le débit de distribution des composants en sortie de la trémie. Aussi, l'angle d'ouverture de l'obturateur est ajusté de manière automatisée, par exemple en fonction des besoins en composants du poste de travail en amont du dispositif de distribution. On comprend que ces moyens d'ajustement permettent encore de faciliter et d'améliorer la régulation du débit de distribution des composants. De manière non limitative, les moyens d'ajustement peuvent être motorisés et asservis en temps réel.

De manière avantageuse, l'organe de régulation comporte un limiteur de couple permettant de bloquer la fermeture de l'obturateur en cas de bourrage. Ainsi, lorsque l'obturateur se ferme, pour réduire le débit de distribution des composants, et qu'un composant reste bloqué entre l'obturateur et le bord de la petite ouverture de la trémie, le limiteur de couple détecte une éventuelle force résistante s'opposant à la fermeture dudit obturateur. La fermeture de l'obturateur est immédiatement interrompue, ce qui réduit le risque d'écraser et d'endommager les composants.

Préférentiellement, la trémie comporte en outre un capteur capacitif pour estimer la quantité de composants restants dans la trémie au cours de la distribution. Un premier intérêt est de permettre à un opérateur de connaitre en temps réel l'avancement du processus de distribution des composants. Un second intérêt est de pouvoir adapter la position de distribution et notamment l'angle de pivotement de l'ensemble constitué par la trémie et le support en position de couplage, par rapport à la première position. On comprend que lors de la distribution, la trémie se vide et les composants atteignent plus difficilement la petite ouverture de la trémie. Il est alors nécessaire d'augmenter l'angle de pivotement afin d'augmenter l'inclinaison du bac et de la trémie et ainsi permettre aux composants d'atteindre la petite ouverture de la trémie.

Selon un autre aspect de l'invention, celle-ci concerne une installation pour le conditionnement de liquide dans des bouteilles fermées au moyen de bouchons, ladite installation comprenant au moins un dispositif de distribution, en composants du type bouchons ou préformes de bouteilles. En outre, cette installation objet de l'invention comprend un convoyeur de dépose agencé sous la petite ouverture de la trémie lorsque l'ensemble constitué par la trémie et le support est en position de distribution, ledit convoyeur de dépose approvisionnant un dispositif d'alimentation en composants. Le convoyeur de dépose joue donc le rôle d'un poste de réception des composants.

L'invention porte en outre sur un procédé de distribution régulée de composants contenus dans un bac au moyen d'un dispositif de distribution régulée selon l'invention, dans lequel :
- on amène le bac rempli de composants dans le dispositif de distribution ;
- on engage le bac avec le support ;
- on rapproche la trémie et le support jusqu'en une position de couplage dans laquelle la grande ouverture de la trémie recouvre l'ouverture supérieure du bac ;
- on fait pivoter, autour d'un axe de rotation non vertical, l'ensemble constitué par la trémie et le support en position de couplage, depuis une première position dans laquelle la petite ouverture de la trémie se trouve au-dessus de la grande ouverture de la trémie vers au moins une deuxième position, dite position de distribution, dans laquelle la petite ouverture se trouve en-dessous de la grande ouverture ;
- on régule le débit des composants sortants de la trémie en actionnant l'organe de régulation.

### Brève description des dessins

L'invention sera mieux comprise à la lecture de la description qui suit d'un mode de réalisation de l'invention donné à titre d'exemple non limitatif, en référence aux dessins annexés, sur lesquels :
- la figure **1** illustre un dispositif de distribution régulée selon l'invention, en position initiale;
- la figure **2** illustre le dispositif de distribution de la figure **1****,** la trémie et le support étant en position de couplage, dans la première position ;
- la figure **3** illustre le dispositif de distribution de la figure **1****,** la trémie et le support étant en position de couplage, dans la position de distribution ;
- la figure **4** est une vue de détail d'un organe de régulation du dispositif de distribution selon l'invention ;
- la figure **5** représente l'organe de régulation de la figure **4****,** en vue de côté, en position ouverte ;
- la figure **6** représente l'organe de régulation de la figure **5****,** en position partiellement fermée ; et
- la figure **7** représente l'organe de régulation de la figure **5** en position fermée.

### Description détaillée de l'invention

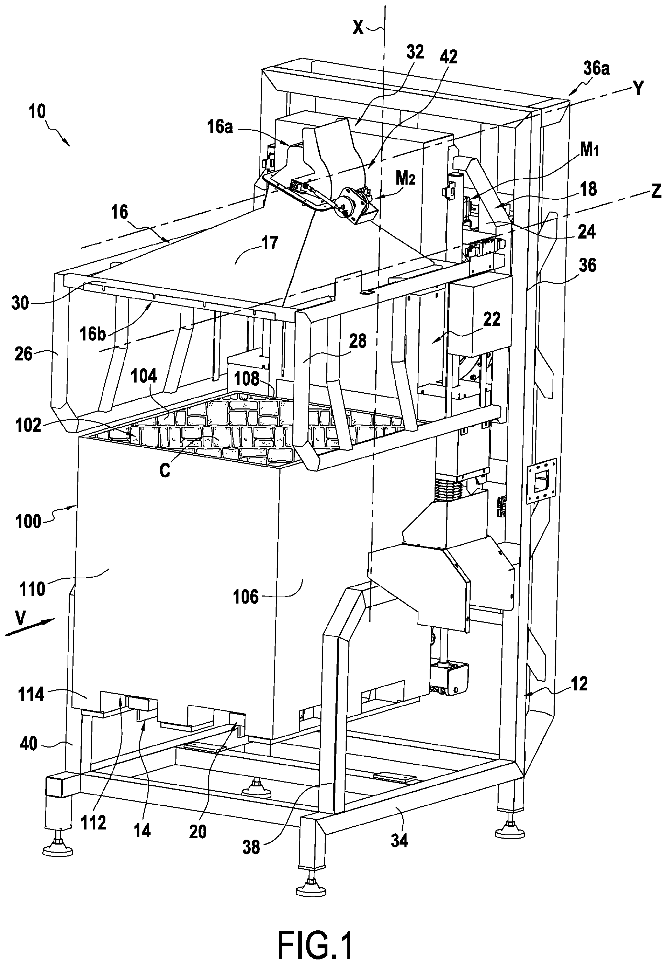

Sur la figure **1****,** on a illustré un dispositif de distribution **10** selon l'invention, pour la distribution régulée de composants **C** comprenant une armature **12,** un support **14,** une trémie **16** et un châssis **18** pivotant par rapport à l'armature. De manière non limitative, les composants **C** peuvent être des bouchons de bouteilles ou des préformes de bouteilles en plastique.

Les composants **C** à distribuer sont initialement contenus dans un bac **100** ayant une ouverture supérieure **102,** une première paroi latérale **104,** une seconde paroi latérale **106,** une paroi arrière **108,** une paroi avant **110** et une paroi de fond **112.** Dans l'exemple de la figure **1****,** la paroi de fond du bac **100** est munie de patins de maintien **114** sensiblement rectangulaires.

Le support **14** comprend une portion inférieure **20** configurée pour supporter et maintenir un bac **100** contenant les composants **C** à distribuer ainsi qu'une portion de guidage **22.** De manière non limitative, la portion inférieure **20** peut consister en une plaque rigide ayant une surface supérieure en matériau agrippant, de manière à empêcher le glissement du bac **100.** La portion inférieure **20** peut également consister, comme dans l'exemple de la figure **1****,** en un assemblage ajouré de barreaux, dont les jours coopèrent avec les patins de maintien **114** du bac **100,** afin de maintenir ce dernier en position.

La portion de guidage **22** est solidaire de la portion inférieure **20** du support et est sensiblement perpendiculaire à cette portion inférieure **20.** Lorsque le bac **100** est disposé sur la portion inférieure **20** du support **14,** la portion de guidage **22** est sensiblement parallèle à la paroi arrière **108** du bac **100.**

Le châssis **18** comporte en outre une portion de pivotement **24** disposée parallèlement à la portion de guidage **22** du support **14.** Dans cet exemple, la portion de pivotement **24** est en outre munie d'une glissière configurée pour permettre le coulissement de la portion de guidage **22** du support **14** par rapport à ladite portion de pivotement **24** du châssis **18,** suivant un axe de coulissement **X.** Le déplacement du support **14** par rapport au châssis **18** est ici un mouvement de translation suivant l'axe de coulissement **X.** En outre, la portion de pivotement **24** est munie d'un premier moteur **M₁** permettant de commander le déplacement du support **14** par rapport au châssis **18,** suivant l'axe de coulissement **X.** Le moteur **M₁** forme ainsi un premier moyen de déplacement du support **14** par rapport au châssis **18.**

Le châssis **18** comporte également deux portions latérales **26,28** faisant saillie transversalement depuis la portion de pivotement **24.** Ces portions latérales **26,28** flanquent le bac **100** et ont notamment pour fonction d'assurer que le bac reste dans la position de couplage lorsque le bac est retourné.

Les deux portions latérales **26,28** sont reliées par deux traverses formant, avec les deux portions latérales **26,28** un cadre **30,** disposé transversalement par rapport à la portion de pivotement **24** et sensiblement parallèlement à la portion inférieure **20** du support **14.**

La trémie **16** comporte une petite ouverture **16a** et une grande ouverture **16b.** Comme il sera expliqué plus en détail ci-dessous, la petite ouverture **16a** présente une section de passage variable. Elle comporte en outre un corps principal **17** présentant sensiblement la forme d'une pyramide tronquée. La trémie **16** est maintenue par le cadre **30** au niveau de la grande ouverture **16b,** de sorte qu'elle est solidaire du châssis **18.** En particulier, la trémie **16** est maintenue par le cadre de sorte que la petite ouverture **16a** est opposée au support **14.**

Dans cet exemple non limitatif, la trémie **16** comporte également un organe de régulation **32,** solidaire du corps principal **17,** configuré pour réguler le débit de composants sortant de la petite ouverture **16a.** L'organe de régulation permet notamment d'obturer tout ou partie de la petite ouverture **16a.** L'organe de régulation **32** comporte en outre un obturateur **33** pivotant selon un axe de pivotement **Y** sensiblement perpendiculaire à l'axe de coulissement **X.** L'organe de régulation **32** est ici muni d'un second moteur **M₂** permettant d'actionner l'ouverture ou la fermeture de l'obturateur **33.** Le moteur règle donc l'angle d'ouverture dudit obturateur **33.**

Sans sortir du cadre de l'invention, la trémie **16** peut comporter tout type d'obturateur pivotant, motorisé ou manuel, permettant d'obturer plus ou moins la petite ouverture **16a.**

Par ailleurs, de manière non limitative, l'obturateur **33** peut comporter également un plateau de transfert **35** formant glissière, configuré pour accompagner les composants **C** qui sortent de la trémie **16.** Ce dernier permet d'adoucir la chute des composants **C** et d'éviter ainsi l'endommagement desdits composants **C.**

Le dispositif de distribution **10** illustré en figure **1****,** comporte une armature **12** disposée sur le sol. L'armature **12** comporte notamment une assise **34,** une portion de structure **36** disposée sensiblement verticalement et deux rambardes latérales **38,40** joignant l'assise **34** et la portion de structure **36.**

La portion de pivotement **24** du châssis **18** est montée pivotante par rapport à la portion de structure **36** de l'armature **12** suivant un axe de rotation **Z** transversal à ladite portion de structure **36** et s'étendant de manière sensiblement horizontale. On constate que la portion de structure **36** de l'armature **12** est sensiblement parallèle à la portion de pivotement **24** du châssis **18.** En outre, l'armature **12** comporte un troisième moteur permettant au châssis **18** de pivoter par rapport à l'armature **12,** selon ledit axe de rotation **Z.** On comprend donc que le pivotement du châssis **18** par rapport à l'armature **12,** suivant l'axe de rotation **Z** entraine conjointement le pivotement de la trémie **16,** du support **14** et du bac **100** suivant ce même axe de rotation **Z.**

On constate également que, dans cet exemple, l'axe de pivotement **Y** de l'obturateur **33** de l'organe de régulation **32** est sensiblement parallèle à l'axe de rotation **Z** du châssis **18** par rapport à l'armature **12.**

Le châssis **18** est monté pivotant par rapport à l'armature **12** au niveau de l'extrémité supérieure **36a** de la portion de structure **36,** de sorte que dans la position initiale, illustrée en figure **1****,** la portion inférieure **20** du support **14** n'entre pas en contact avec le sol.

On va maintenant expliquer le fonctionnement du dispositif de distribution **10** tel que décrit précédemment.

En position initiale, le support **14** est en position basse. Dans l'exemple de la figure **1****,** un bac **100,** initialement rempli de composants **C,** par exemple des bouchons de bouteille ou bien des préformes de bouteilles, est amené sur le support **14** suivant une direction de convoyage **V,** de sorte que la paroi arrière **108** du bac **100** est en regard de la portion de guidage **22** du support **14.** En outre, l'ouverture supérieure **102** du bac **100** est orientée vers le haut, en regard de la grande ouverture **16b** de la trémie **16.** Le bac **100** peut être déposé sur la portion inférieure **20** du support **14** par un opérateur, par exemple au moyen d'un chariot élévateur. Le bac **100** peut également être convoyé via un tapis convoyeur disposé en amont du dispositif de distribution **10.**

On constate que dans l'exemple non limitatif de la figure **1****,** la portion de structure **36** est sensiblement transversale à la direction de convoyage **V.**

Dans une première étape, illustrée par le passage de la figure **1** à la figure **2****,** le premier moteur **M₁** est actionné, de manière à déplacer le support **14,** et donc le bac **100,** suivant l'axe de coulissement **X** sensiblement vertical. Ceci a pour conséquence de rapprocher le bac **100** de la trémie **16,** qui elle reste fixe par rapport au châssis **18.**

Une variante pourrait consister à fixer le support **14** par rapport au châssis **18** et à déplacer la trémie **16** pour la rapprocher du support **14.**

Le support **14** est déplacé selon l'axe de coulissement **X** jusqu'à ce que la trémie **16** et le bac **100** entrent en contact ou quasiment en contact, de sorte que l'interstice entre le bac et la trémie est inférieur à la plus petite dimension du composant. Le composant ne peut donc pas sortir par l'interstice éventuellement existant entre le bord supérieur de la trémie qui définit la grande ouverture **16b** de ladite trémie et le bac. Une fois le contact établi, le bac **100** est maintenu entre la portion inférieure **20** du support **14** et la trémie **16,** de sorte que la grande ouverture **16b** de la trémie **16** couvre l'ouverture supérieure **102** du bac **100.** Dans cette position, dite position de couplage, la trémie **16** et le bac définissent un volume intérieur.

De préférence, la largeur I et la longueur **L** du bac **100** sont égales respectivement à la largeur **l'et** à la longueur **L'** de la trémie **16,** de sorte que le contact entre la trémie **16** et le bac **100** est sensiblement hermétique. La trémie **16** peut en outre comporter un joint assurant l'étanchéité du contact.

Dans la position de couplage, les portions latérales **26,28** du châssis **18** s'étendent de part et d'autre du bac **100,** le long des parois latérales **106,108** dudit bac **100,** de manière à assurer son maintien latéral.

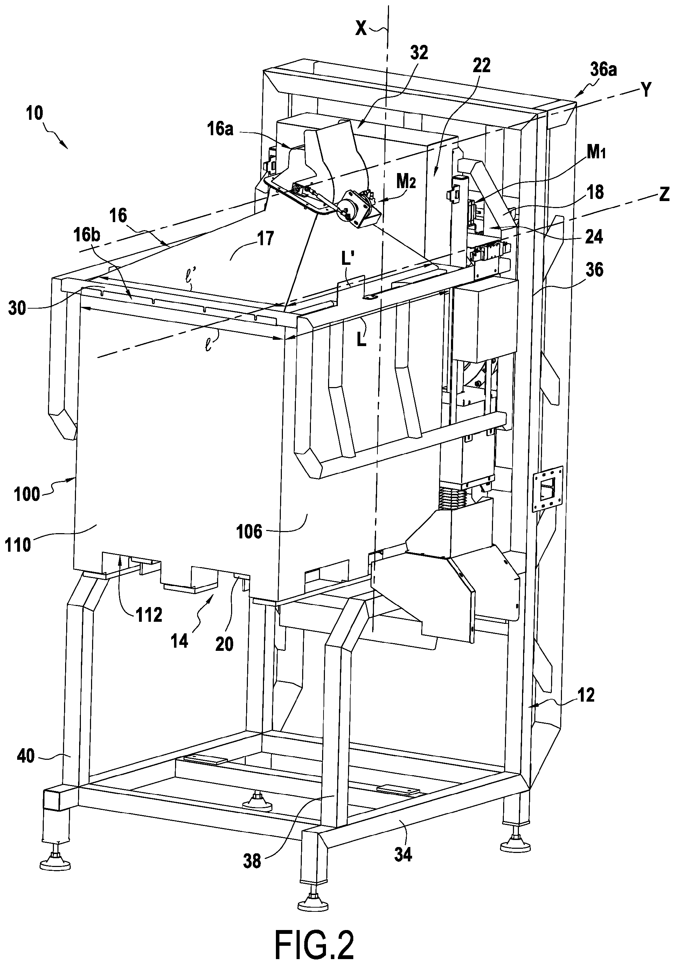

Comme on le constate sur la figure **2****,** L'ensemble constitué par le support **14** et la trémie **16** en position de couplage est donc placé dans une première position, dans laquelle la petite ouverture **16a** de la trémie se trouve au-dessus de la grande ouverture **16b** de la trémie **16.** Les composants sont ici contenus dans le bac **100.**

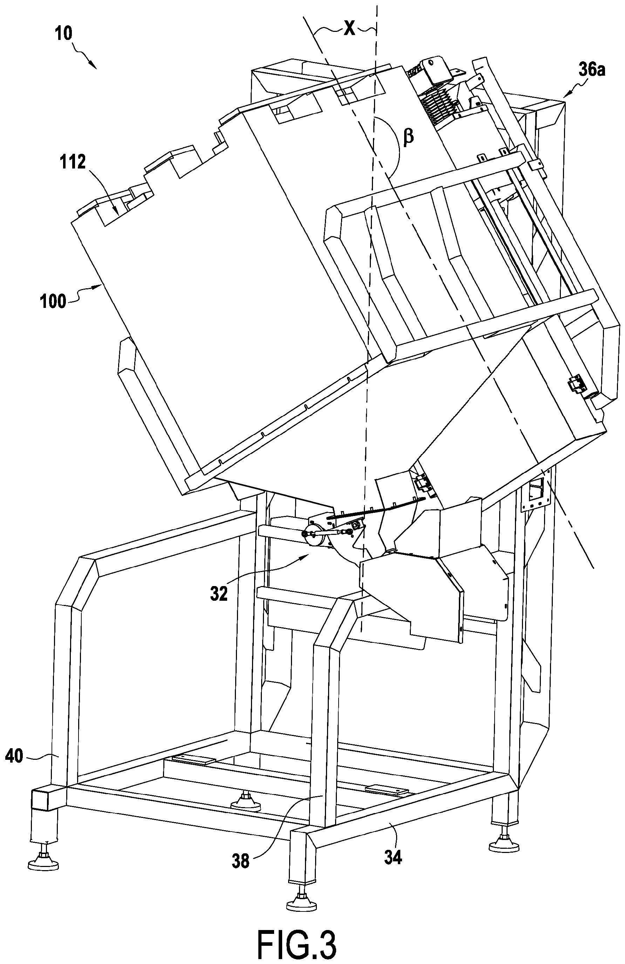

Ensuite, comme illustré par le passage de la figure **2** à la figure **3****,** le troisième moteur est actionné, de manière à faire pivoter le châssis **18** selon l'axe de rotation **Z,** selon un premier sens de pivotement. Ce pivotement du châssis **18** a pour conséquence de faire pivoter l'ensemble constitué par le support **14,** la trémie **16** et le bac **100,** maintenu entre ledit support **14** et ladite trémie **16,** jusqu'à une deuxième position, dite position de distribution, dans laquelle la petite ouverture **16a** de la trémie **16** se trouve en-dessous de la grande ouverture **16b** de la trémie **16.**

De manière non limitative, l'axe de pivotement **Y** est ici sensiblement parallèle à la direction de convoyage **V.**

Lors du pivotement, les composants **C** initialement contenus dans le bac **100** sont versés dans la trémie **16** puis sont guidés à travers la petite ouverture **16a** de la trémie **16** pour être distribués sur un poste de réception situé en aval du dispositif de distribution **10.** Le poste de réception est situé de préférence sous la petite ouverture **16a** de la trémie **16** lorsque la position de distribution est atteinte.

Sans sortir du cadre de l'invention, le pivotement de l'ensemble constitué par la trémie **16** et le support **14** en position de couplage, depuis la première position jusqu'à la position de distribution, peut se faire lentement ou rapidement. Toutefois, on comprend qu'il est préférable que ce pivotement s'effectue lentement de sorte que les composants **C** glissent doucement depuis le bac **100** jusque dans la trémie **16** lors dudit pivotement. Ceci permet de limiter les chocs risquant d'endommager les composants **C.**

De préférence, l'angle **β,** considéré dans un plan vertical, entre la première position et la position de distribution, suivant l'axe de rotation **Z,** est compris entre 90° et 180°. Autrement dit, l'angle **β** entre l'axe de coulissement **X** dans la première position et l'axe de coulissement **X** dans la position de distribution, considéré dans ledit plan vertical, est compris entre 90° et 180°. Encore de préférence, cet angle **β** est environ égal à 135°. Avec un angle **β** de 135°, la trémie est positionnée de telle sorte qu'elle permet un guidage progressif des composants **C** vers sa petite ouverture **16a,** ce qui limite la quantité de composants **C** s'engouffrant par ladite petite ouverture **16a.** Cet angle **β** participe donc à une meilleure régulation de la distribution des composants **C** et permet de réduire les risques de bourrage au niveau de la petite ouverture **16a.**

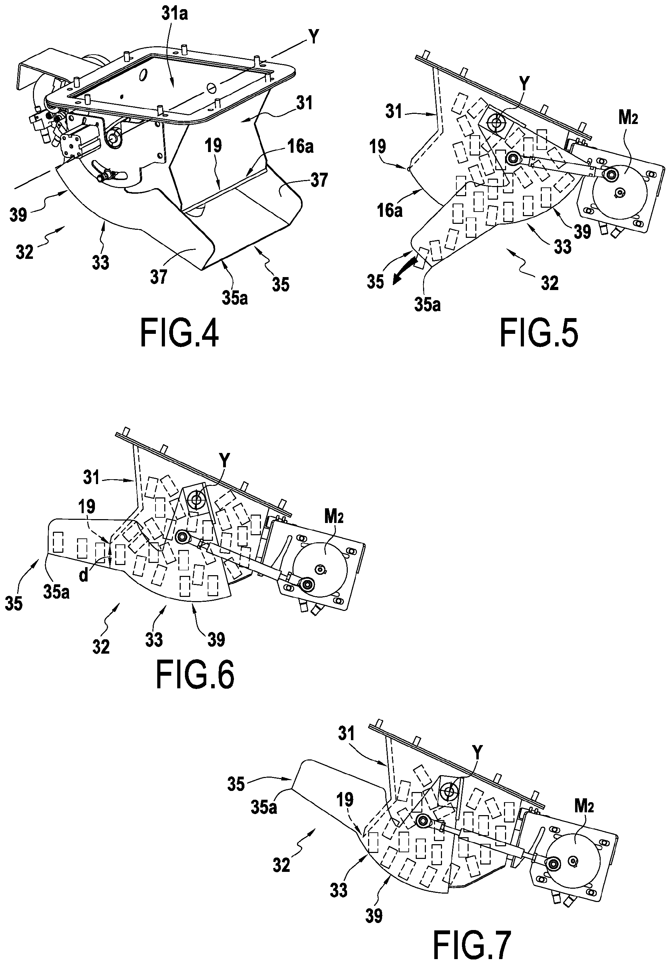

La figure **4** illustre l'organe de régulation **32** qui est destiné à être solidarisé au corps principal **17** de la trémie **16.** Ledit organe de régulation **32** comporte un boîtier **31** comprenant la petite ouverture **16a** de la trémie **16** ainsi qu'une ouverture supérieure **31a,** opposée à la petite ouverture **16a,** communiquant avec une ouverture du corps principal de la trémie. Dans cet exemple, l'obturateur **33** est monté de manière pivotante par rapport au boîtier **31** suivant l'axe de pivotement **Y.** L'obturateur comporte un réservoir tampon **39** configuré pour recevoir une petite quantité de composants lorsque l'ensemble constitué de la trémie **16** et du support **14** est dans la position de distribution. Ce réservoir tampon présente une forme cylindrique, dont l'axe est coaxial avec l'axe de pivotement de l'obturateur **33,** de sorte qu'il permet de recevoir lesdits composants sortant de la trémie. L'obturateur **33** comporte en outre un plateau de transfert **35** formant glissière disposé sous le boîtier **31** de l'organe de régulation, et sous la petite ouverture **16a.**

Comme on le constate sur la figure **6****,** la longueur de l'obturateur, considérée selon une direction perpendiculaire à l'axe de pivotement de l'obturateur, est supérieure à la longueur de la petite ouverture **16a** considérée selon cette même direction. Aussi, le plateau de transfert **35** est configuré de manière à s'étendre au-delà du bord avant **19** de ladite petite ouverture. En outre, le réservoir tampon **39** est disposé sous un plan passant par le plateau de transfert **35.**

L'obturateur comporte également des joues latérales **37** bordant le plateau de transfert **35** et permettant d'améliorer le guidage des composants. En outre, l'organe de régulation **32** comprend un actionneur, dans cet exemple un moteur **M₂,** fixé au boîtier **31.** Ledit moteur **M₂** coopère avec l'obturateur **33** pour le faire pivoter par rapport au boîtier **31** de l'organe de régulation, suivant l'axe de pivotement **Y.**

L'organe de régulation **32** permet de réguler le débit de composants **C** distribués sur le poste de réception. Pour ce faire, on modifie le niveau d'obturation de la petite ouverture en ajustant l'angle d'inclinaison du plateau de transfert **35** formant glissière, grâce à l'action du moteur **M₂,** comme illustré dans l'exemple des figures **5** à **7****.**

Sur la figure **5****,** l'organe de régulation est en position ouverte, sur la figure **6** il est en position partiellement fermée et sur la figure **7** il est en position fermée. Dans la position ouverte, la petite ouverture de la trémie n'est pas obturée. Dans la position partiellement fermée, la petite ouverture **16a** n'est pas totalement obturée mais la distance **d** entre le bord avant **19** de la petite ouverture et le plateau de transfert **35** n'est pas suffisante pour permettre la distribution des composants. Dans la position fermée, la petite ouverture est totalement obturée.

De préférence, la régulation est adaptée aux besoins de l'ensemble de la chaîne d'acheminement, ce qui permet d'améliorer l'acheminement des composants **C** et d'éviter les engorgements et le bourrage pouvant abîmer les composants **C.** Comme on peut le voir par le passage de la figure **5** à la figure **7****,** on comprend que si le poste de réception est surchargé en composants **C,** l'obturateur **33** pivotant de l'organe de régulation **32** pivote pour augmenter l'obturation et réduire la section de passage de la petite ouverture **16a** et ainsi limiter le débit de distribution des composants **C.** Inversement, lorsque le poste de réception est peu encombré, l'obturateur pivotant **33** de l'organe de régulation **32** pivote pour réduire l'obturation et augmenter la section de passage de la petite ouverture **16a** et ainsi augmenter le débit de distribution des composants **C.** La régulation se fait donc en temps réel et le débit de distribution est asservi, notamment par la chaîne d'acheminement des composants, en aval du dispositif de distribution **10.**

En outre, le plateau de transfert **35** formant glissière permet d'accompagner la chute des composants et améliore encore la régulation du débit de distribution, comme on peut le voir, en position ouverte, sur la figure **5****.**

Pour faire passer l'organe de régulation de la position ouverte à la position partiellement fermée, l'obturateur est pivoté selon son axe de pivotement.

On constate alors que dans la position partiellement fermée illustrée en figure **6****,** le plateau de transfert **35** est légèrement incliné vers le haut par rapport à un plan horizontal. De cette manière, les composants présents sur ledit plateau de transfert **35** de l'obturateur **33** tendent à retourner vers le réservoir tampon **39** dudit obturateur.

En outre, l'accumulation des composants situés dans le réservoir tampon **39** entre le bord avant **19** de la petite ouverture **16a** et le plateau de transfert **35** en position partiellement fermée a pour effet de créer un bourrage, illustré en figure **6****,** qui stoppe la distribution des composants alors même que la petite ouverture **16a** n'est pas complétement obturée par l'obturateur **33.** Ce bourrage est obtenu par le fait que la distance **d** est choisie de manière à être légèrement plus grande que l'envergure maximale d'un composant. Cette distance **d** pourra être réglée afin de s'adapter aux dimensions des composants. La distance maintenue entre le bord **19** de la petite ouverture et le plateau de transfert **35** permet également d'éviter le pincement des composants.

Inversement, lorsque l'obturateur est pivoté dans le sens inverse de manière à passer de la position partiellement fermée à la position ouverte, la petite quantité de composants présents dans le réservoir tampon **39** de l'obturateur **33** glisse jusqu'au plateau de transfert **35** avant d'être distribuée. Grâce à la combinaison du réservoir tampon **39** et du plateau de transfert **35,** la distribution est plus précise et la quantité de composants distribués est mieux maitrisée. Dans la position partiellement fermée illustrée en figure **6****,** on constate que le bord avant **35a** situé à l'extrémité libre du plateau de transfert **35** est disposé au-dessus du bord **19** de la petite ouverture **16a** de la trémie **16.** Ceci permet de mieux contenir les composants afin d'interrompre efficacement la distribution.

L'obturateur **33** peut en outre obturer complétement la petite ouverture de la trémie de manière à placer l'organe de régulation **32** en position fermée, comme représenté en figure **7****.**

L'organe de régulation **32** est également muni d'un limiteur de couple, permettant de bloquer la fermeture de l'obturateur en cas de bourrage, ce qui permet d'éviter d'endommager les composants **C.**

La trémie comporte en outre un capteur capacitif **42** pour estimer la quantité de composants restants dans la trémie au cours de la distribution. Ceci permet notamment de régler la position de distribution et l'angle **β** associé. On comprend que lors de la distribution, la trémie **16** se vide et les composants **C** atteignent moins facilement la petite ouverture **16a** de la trémie. Il est alors nécessaire d'augmenter l'angle **β** afin d'augmenter l'inclinaison du bac **100** et de la trémie **16** et ainsi permettre aux composants d'atteindre la petite ouverture **16a** de la trémie **16.**

Afin de vider entièrement le bac **100** de ses composants **C,** l'ensemble constitué par la trémie **16** et le support **14** en position de couplage peut être placé dans une position de vidange. L'angle entre cette position de vidange et la première position dudit ensemble est sensiblement égal à 180°. Dans cette position de vidange, le bac **100** est entièrement retourné de sorte que l'ouverture supérieure **102** du bac **100** est dirigée verticalement vers le bas, en regard du sol. Cette position de vidange favorise la distribution des derniers composants **C** restants dans le bac **100,** à travers la petite ouverture **16a** de la trémie **16.**

En variante, la portion de structure **36** de l'armature **12** peut être disposée sensiblement parallèlement à la direction de convoyage, de sorte que l'axe de rotation **Z** du châssis **18** par rapport à l'armature **12** est transversal à la direction de convoyage.

Le fonctionnement du dispositif de distribution **10** est réversible, de sorte qu'il est possible d'interrompre le processus de distribution pour revenir en position initiale, en répétant les étapes décrites précédemment, dans l'ordre inverse. En d'autres mots, lorsque la distribution est en cours, c'est-à-dire lorsque l'ensemble constitué par la trémie **16** et le support **14** en position de couplage est dans la position de distribution, il est possible de fermer l'obturateur **33** de manière à stopper la distribution de composants **C.** Le troisième moteur est alors actionné pour faire pivoter l'ensemble constitué par le châssis **18** et le support **14,** en position de couplage, selon un second sens de pivotement et jusqu'à revenir dans la première position. Les composants **C** restants dans la trémie **16** sont ainsi reversés dans le bac **100.** Le premier moteur **M₁** est ensuite actionné de manière à déplacer le support **14,** et donc le bac **100,** suivant l'axe de coulissement **X,** vers le bas.

Le bac se trouve alors dans sa position initiale, maintenu sur le support **14.** L'opérateur peut alors retirer le bac **100,** le remplacer, ajouter des composants **C** ou encore prélever des échantillons de composants **C.**

## Revendications

1. Dispositif de distribution (10) régulée pour la distribution de composants (C) contenus dans un bac (100) ayant une ouverture supérieure (102), le dispositif de distribution comprenant :
• une trémie (16) ayant une grande ouverture (16b) et une petite ouverture (16a) opposée à la grande ouverture ;
• un support (14) configuré pour recevoir et maintenir le bac (100) ;
• des premiers moyens de déplacement (M₁) configurés pour rapprocher la trémie (16) et le support (14) jusqu'en une position de couplage dans laquelle la grande ouverture (16b) de la trémie recouvre l'ouverture supérieure (102) du bac ;
• des seconds moyens de déplacement (M₂) configurés pour faire pivoter, autour d'un axe de rotation (Z) non vertical, l'ensemble constitué par la trémie et le support en position de couplage, entre une première position dans laquelle la petite ouverture (16a) de la trémie se trouve au-dessus de la grande ouverture (16b) de la trémie et au moins une deuxième position, dite position de distribution, dans laquelle la petite ouverture (16a) se trouve en-dessous de la grande ouverture (16b), la trémie (16) comportant en outre un organe de régulation (32) configuré pour réguler le débit de distribution des composants (C) sortant par la petite ouverture lorsque ledit ensemble est dans la position de distribution, **caractérisé en ce que** l'organe de régulation (32) comporte un obturateur pivotant (33) configuré pour obturer tout ou partie de la petite ouverture (16a) de la trémie.

2. Dispositif de distribution selon la revendication 1, **caractérisé en ce que** les premiers moyens de déplacement sont configurés pour déplacer le support (14) vers la trémie (16) selon une direction sensiblement verticale.

3. Dispositif de distribution selon la revendication **1** ou **2, caractérisé en ce que** l'angle (β), considéré dans un plan vertical, entre ladite première position de repos et ladite position de distribution, suivant l'axe de rotation (Z) de l'ensemble constitué de la trémie et du support, est compris entre 90° et 180°, de préférence entre 110° et 160°.

4. Dispositif de distribution selon l'une quelconque des revendications **1 à 3, caractérisé en ce que** les seconds moyens de déplacement sont configurés pour disposer l'ensemble constitué par la trémie (16) et le support (14), en position de couplage, dans une position de vidange correspondant à un pivotement dudit ensemble de 180° par rapport à la première position.

5. Dispositif de distribution selon l'une quelconque des revendications **1** à **4, caractérisé en ce que** l'obturateur (33) est pivotant suivant un axe de pivotement (Y) sensiblement parallèle à l'axe de rotation de l'ensemble constitué de la trémie et du support.

6. Dispositif de distribution selon l'une quelconque des revendications **1** à **5, caractérisé en ce que** l'obturateur pivotant (33) comporte un réservoir tampon (39) pour recevoir les composants sortant de la trémie.

7. Dispositif de distribution selon l'une quelconque des revendications **1** à **6, caractérisé en ce que** l'obturateur pivotant (33) comporte un plateau de transfert (35) formant glissière configuré pour accompagner les composants qui sortent de la trémie.

8. Dispositif de distribution selon les revendications **6** et **7, caractérisé en ce que** le réservoir tampon (39) est disposé sous un plan passant par le plateau de transfert (35).

9. Dispositif de distribution selon la revendication **7** ou **8, caractérisé en ce que** l'organe de régulation comporte des moyens d'ajustement de l'angle de rotation du plateau de transfert, afin de réguler le débit de distribution des composants en sortie de la trémie.

10. Dispositif de distribution selon l'une quelconque des revendications **1** à **9, caractérisé en ce que**, considérée selon une direction perpendiculaire à l'axe de pivotement de l'obturateur, la longueur de l'obturateur pivotant (33) est supérieure à la longueur de la petite ouverture (16a) de la trémie (16).

11. Dispositif de distribution selon l'une quelconque des revendications **1 à 10, caractérisé en ce que** l'organe de régulation comporte un limiteur de couple permettant de bloquer la fermeture de l'obturateur en cas de bourrage.

12. Dispositif de distribution selon l'une quelconque des revendications **1 à 11, caractérisé en ce que** la trémie (16) comporte en outre un capteur capacitif (42) pour estimer la quantité de composants (C) restants dans la trémie au cours de la distribution.

13. Installation pour le conditionnement de liquide dans des bouteilles fermées au moyen de bouchons, ladite installation comprenant au moins un dispositif de distribution (10) régulée de composants du type bouchons ou préformes de bouteilles, selon l'une quelconque des revendications **1 à 12.**

14. Installation selon la revendication **13, caractérisé en ce qu'**elle comporte un convoyeur de dépose agencé sous la petite ouverture (16a) de la trémie (16) lorsque l'ensemble constitué par la trémie et le support (14) est en position de distribution, ledit convoyeur de dépose approvisionnant un dispositif d'alimentation en composants.

15. Procédé de distribution régulée de composants contenus dans un bac (100) au moyen d'un dispositif de distribution (10) régulée selon l'une quelconque des revendications **1 à 14,** dans lequel :
• on amène le bac rempli de composants dans le dispositif de distribution ;
• on engage le bac avec le support (14) ;
• on rapproche la trémie (16) et le support jusqu'en une position de couplage dans laquelle la grande ouverture (16b) de la trémie recouvre l'ouverture supérieure du bac ;
• on fait pivoter, autour d'un axe de rotation non vertical, l'ensemble constitué par la trémie, le support et le bac en position de couplage, depuis une première position dans laquelle la petite ouverture de la trémie se trouve au-dessus de la grande ouverture de la trémie vers au moins une deuxième position, dite position de distribution, dans laquelle la petite ouverture se trouve en-dessous de la grande ouverture ;
• on régule le débit des composants sortants de la trémie en actionnant l'organe de régulation.

## Patentansprüche

1. Vorrichtung zur regulierten Verteilung (10) für die Verteilung von Komponenten (C), die in einem Behälter (100) enthalten sind, der eine obere Öffnung (102) aufweist, wobei die Vorrichtung zur Verteilung umfasst:
• einen Trichter (16), der eine große Öffnung (16b) und eine kleine Öffnung (16a) gegenüber der großen Öffnung aufweist,
• eine Stütze (14), die dazu ausgestaltet ist, den Behälter (100) aufzunehmen und zu halten,
• erste Verschiebungsmittel (M₁), die dazu ausgestaltet sind, den Trichter (16) und die Stütze (14) näher zueinander zu bringen, bis zu einer Kopplungsposition, in der die große Öffnung (16b) des Trichters die obere Öffnung (102) des Behälters bedeckt,
• zweite Verschiebungsmittel (M₂), die dazu ausgestaltet sind, die Baugruppe, die aus dem Trichter und der Stütze besteht, in der Kopplungsposition zwischen einer ersten Position, in der sich die kleine Öffnung (16a) des Trichters über der großen Öffnung (16b) des Trichters befindet, und zumindest einer zweiten Position, die als Verteilungsposition bezeichnet wird, in der sich die kleine Öffnung (16a) unter der großen Öffnung (16b) befindet, um eine nicht vertikale Drehachse (Z) drehen zu lassen,
wobei der Trichter (16) ferner ein Regulierelement (32) beinhaltet, das dazu ausgestaltet ist, den Verteilungsdurchsatz der Komponenten (C), die aus der kleinen Öffnung austreten, wenn die Baugruppe in der Verteilungsposition ist, zu regulieren, **dadurch gekennzeichnet, dass**
das Regulierelement (32) einen Schwenkverschluss (33) beinhaltet, der dazu ausgestaltet ist, die gesamte kleine Öffnung (16a) des Trichters oder einen Teil davon zu verschließen.

2. Vorrichtung zur Verteilung nach Anspruch 1, **dadurch gekennzeichnet, dass** die ersten Verschiebungsmittel dazu ausgestaltet sind, die Stütze (14) gemäß einer im Wesentlichen vertikalen Richtung zu dem Trichter (16) zu verschieben.

3. Vorrichtung zur Verteilung nach Anspruch 1 oder 2, **dadurch gekennzeichnet, dass** der Winkel (β), der als in einer vertikalen Ebene angesehen wird, zwischen der ersten Ruheposition und der Verteilungsposition gemäß der Drehachse (Z) der Baugruppe, die aus dem Trichter und der Stütze besteht, zwischen 90 ° und 180 °, bevorzugt zwischen 110° und 160° beträgt.

4. Vorrichtung zur Verteilung nach einem der Ansprüche 1 bis 3, **dadurch gekennzeichnet, dass** die zweiten Verschiebungsmittel dazu ausgestaltet sind, die Baugruppe, die aus dem Trichter (16) und der Stütze (14) besteht, in der Kopplungsposition in einer Entleerungsposition anzuordnen, die einem Schwenken der Baugruppe um 180 ° in Bezug auf die erste Position entspricht.

5. Vorrichtung zur Verteilung nach einem der Ansprüche 1 bis 4, **dadurch gekennzeichnet, dass** der Verschluss (33) gemäß einer Schwenkachse (Y) schwenkt, die im Wesentlichen parallel zu der Drehachse der Baugruppe ist, die aus dem Trichter und der Stütze besteht.

6. Vorrichtung zur Verteilung nach einem der Ansprüche 1 bis 5, **dadurch gekennzeichnet, dass** der Schwenkverschluss (33) einen Zwischenspeicher (39) beinhaltet, um die Komponenten aufzunehmen, die aus dem Trichter austreten.

7. Vorrichtung zur Verteilung nach einem der Ansprüche 1 bis 6, **dadurch gekennzeichnet, dass** der Schwenkverschluss (33) eine Transferplatte (35) beinhaltet, die eine Gleitbahn bildet, die dazu ausgestaltet ist, die Komponenten zu begleiten, die aus dem Trichter austreten.

8. Vorrichtung zur Verteilung nach den Ansprüchen 6 und 7, **dadurch gekennzeichnet, dass** der Zwischenspeicher (39) unter einer Ebene angeordnet ist, die durch die Transferplatte (35) verläuft.

9. Vorrichtung zur Verteilung nach Anspruch 7 oder 8, **dadurch gekennzeichnet, dass** das Regulierelement Mittel zur Einstellung des Drehwinkels der Transferplatte beinhaltet, um den Verteilungsdurchsatz der Komponenten beim Austritt aus dem Trichter zu regulieren.

10. Vorrichtung zur Verteilung nach einem der Ansprüche 1 bis 9, **dadurch gekennzeichnet, dass**, gemäß einer Richtung senkrecht zu der Schwenkachse des Verschlusses betrachtet, die Länge des Schwenkverschlusses (33) größer als die Länge der kleinen Öffnung (16a) des Trichters (16) ist.

11. Vorrichtung zur Verteilung nach einem der Ansprüche 1 bis 10, **dadurch gekennzeichnet, dass** das Regulierelement einen Kopplungsbegrenzer beinhaltet, der ermöglicht, die Schließung des Verschlusses bei Stau zu blockieren.

12. Vorrichtung zur Verteilung nach einem der Ansprüche 1 bis 11, **dadurch gekennzeichnet, dass** der Trichter (16) ferner einen kapazitiven Sensor (42) beinhaltet, um die Menge der Komponenten (C) zu schätzen, die im Laufe der Verteilung in dem Trichter bleiben.

13. Installation für die Konditionierung von Flüssigkeit in mittels Korken verschlossenen Flaschen, wobei die Installation zumindest eine Vorrichtung zur regulierten Verteilung (10) von Komponenten der Art von Korken oder Vorformen von Flaschen nach einem der Ansprüche 1 bis 12 umfasst.

14. Installation nach Anspruch 13, **dadurch gekennzeichnet, dass** sie eine Fördervorrichtung zum Ablegen beinhaltet, die unter der kleinen Öffnung (16a) des Trichters (16) vorgesehen ist, wenn die Baugruppe, die aus dem Trichter und der Stütze (14) besteht, in der Verteilungsposition ist, wobei die Fördervorrichtung zum Ablegen eine Vorrichtung zum Zuführen von Komponenten beliefert.

15. Verfahren zur regulierten Verteilung von Komponenten, die in einem Behälter (100) enthalten sind, mittels einer Vorrichtung zur regulierten Verteilung (10) nach einem der Ansprüche 1 bis 14, wobei:
• der mit Komponenten gefüllte Behälter in die Vorrichtung zur Verteilung gebracht wird,
• der Behälter mit der Stütze (14) in Eingriff gebracht wird,
• der Trichter (16) und die Stütze näher zueinander gebracht werden, bis zu einer Kopplungsposition, in der die große Öffnung (16b) des Trichters die obere Öffnung des Behälters bedeckt,
• die Baugruppe, die aus dem Trichter, der Stütze und dem Behälter in der Kopplungsposition besteht, von einer ersten Position, in der sich die kleine Öffnung des Trichters über der großen Öffnung des Trichters befindet, zu zumindest einer zweiten Position, die als Verteilungsposition bezeichnet wird, in der sich die kleine Öffnung unter der großen Öffnung befindet, zum Schwenken um eine nicht vertikale Drehachse gebracht wird,
• der Durchsatz der Komponenten, die aus dem Trichter austreten, reguliert wird, indem das Regulierelement betätigt wird.

## Claims

1. A regulated dispensing device (10) for dispensing components (C) contained in a container (100) having an upper opening (102), the dispensing device comprising:
• a hopper (16) having a large opening (16b) and a small opening (16a) opposite the large opening;
• a support (14) configured to receive and hold the container (100);
• first displacement means (M₁) configured to bring together the hopper (16) and the support (14) up to a coupling position in which the large opening (16b) of the hopper covers the upper opening (102) of the container;
• second displacement means (M₂) configured to pivot, about a non-vertical axis of rotation (Z), the assembly consisting of the hopper and the support in the coupling position, between a first position in which the small opening (16a) of the hopper is located above the large opening (16b) of the hopper and at least a second position, said dispensing position, in which the small opening (16a) is located below the large opening (16b),
the hopper (16) further including a regulation member (32) configured to regulate the rate of dispensing of the components (C) exiting through the small opening when said assembly is in the dispensing position, **characterized in that** the regulation member (32) includes a pivoting shutter (33) configured to seal all or part of the small opening (16a) of the hopper.

2. The dispensing device according to claim **1, characterized in that** the first displacement means are configured to move the support (14) towards the hopper (16) along a substantially vertical direction.

3. The dispensing device according to claim **1** or **2, characterized in that** the angle (β), considered in a vertical plane, between said first rest position and said dispensing position, along the axis of rotation (Z) of the assembly consisting of the hopper and the support, is comprised between 90° and 180°, preferably between 110° and 160°.

4. The dispensing device according to any one of claims **1** to **3, characterized in that** the second displacement means are configured to dispose the assembly consisting of the hopper (16) and the support (14), in the coupling position, in a drain position corresponding to a pivoting of said assembly by 180° relative to the first position.

5. The dispensing device according to any one of claims **1** to **4, characterized in that** the shutter (33) is pivoting along a pivot axis (Y) substantially parallel to the axis of rotation of the assembly consisting of the hopper and the support.

6. The dispensing device according to any one of claims **1** to **5, characterized in that** the pivoting shutter (33) includes a buffer tank (39) to receive the components exiting the hopper.

7. The dispensing device according to any one of claims **1** to **6, characterized in that** the pivoting shutter (33) includes a transfer tray (35) forming a slide configured to accompany the components that exit the hopper.

8. The dispensing device according to claims **6** and **7, characterized in that** the buffer tank (39) is disposed under a plane passing through the transfer tray (35).

9. The dispensing device according to claim **7** or **8, characterized in that** the regulation member includes means for adjusting the angle of rotation of the transfer tray, in order to regulate the rate of dispensing of the components at the outlet of the hopper.

10. The dispensing device according to any one of claims **1** to **9, characterized in that**, considered along a direction perpendicular to the pivot axis of the shutter, the length of the pivoting shutter (33) is greater than the length of the small opening (16a) of the hopper (16).

11. The dispensing device according to any one of claims **1** to **10, characterized in that** the regulation member includes a torque limiter for blocking the closure of the shutter in case of jamming.

12. The dispensing device according to any one of claims **1** to **11, characterized in that** the hopper (16) further includes a capacitive sensor (42) to estimate the amount of components (C) remaining in the hopper during dispensing.

13. An installation for packaging liquid in bottles closed by means of caps, said installation comprising at least one regulated dispensing device (10) for dispensings components of the type bottle caps or preforms, according to any one of claims **1** to **12.**

14. The installation according to claim **13, characterized in that** it includes a deposition conveyor arranged under the small opening (16a) of the hopper (16) when the assembly consisting of the hopper and the support (14) is in the dispensing position, said deposition conveyor supplying a supply device with components.

15. A method for dispensing in a regulated manner components contained in a container (100) by means of a regulated dispensing device (10) according to any one of claims **1** to **14,** wherein:
• the container filled with components is brought into the dispensing device;
• the container is engaged with the support (14);
• the hopper (16) and the support are brought together up to a coupling position in which the large opening (16b) of the hopper covers the upper opening of the container;
• the assembly consisting of the hopper, the support and the container in the coupling position is pivoted, about a non-vertical axis of rotation, from a first position in which the small opening of the hopper is located above the large opening of the hopper to at least a second position, said dispensing position, in which the small opening is located below the large opening;
• the flow rate of the components exiting the hopper is regulated by actuating the regulation member.
